# EUROPEAN PATENT APPLICATION

(11) **EP 3 885 546 A1**
(43) Date of publication of application: **29.09.2021**
(21) Application number: 19887674.0
(22) Date of filing: 24.10.2019
(51) Int. Cl.: F02B 19/08, F02B 19/10, F02B 23/02, F02M 61/18

(54) **PRE-CHAMBER TYPE DIESEL ENGINE**

(30) Priority: 20.11.2018 JP 2018217396
(71) Applicant: Yanmar Power Technology Co., Ltd., Osaka-shi Osaka 530-0013 (JP)
(72) Inventor: ASAI, Go, Osaka-shi, Osaka 530-0013 (JP); MORITA, Gin, Osaka-shi, Osaka 530-0013 (JP); MATSUKI, Kazuya, Osaka-shi, Osaka 530-0013 (JP)
(74) Representative: Dennemeyer & Associates S.A.
(86) International application number: PCT/JP2019/041619
(87) International publication number: WO 2020/105351

(57) **Abstract**

Provided is a pre-chamber type diesel engine in which fuel injected from an injector mixes satisfactorily with air in a pre-combustion chamber. An injector (23) injects fuel so as to be dispersed in a direction orthogonal to a vortex flow of air formed inside a pre-combustion chamber (20).

## Description

### TECHNICAL FIELD

The present invention relates to a pre-chamber type diesel engine having a main combustion chamber and a pre-combustion chamber made to communicate by a communication hole.

### BACKGROUND ART

For example, as shown in Patent Literature 1, a pre-chamber type diesel engine including a main combustion chamber and a pre-combustion chamber made to communicate by a communication hole and an injector that injects fuel into the pre-combustion chamber has become widespread. In the above-mentioned pre-chamber type diesel engine, in a compression stroke of a piston, air flows into the pre-combustion chamber from the main combustion chamber through the communication hole, whereby an air vortex flow is formed in the pre-combustion chamber, and when the piston reaches the vicinity of a top dead center, fuel is injected in a conical shape from the injector toward the vortex flow. The injected fuel is mixed with air in the pre-combustion chamber by the vortex flow, compressed and self-ignited, and the involved gas expansion pushes down the piston so as to obtain work.

At this time, from a viewpoint of emission, in order to reduce smoke and HC contained in combustion gas generated after the ignition, the fuel injected from the injector is preferably mixed uniformly with the air in the pre-combustion chamber.

### CITATION LIST

### Patent Literature

Patent Literature 1: Japanese Patent No. 3851727

### DISCLOSURE OF INVENTION

### PROBLEMS TO BE SOLVED BY THE INVENTION

However, in the pre-chamber type diesel engine disclosed in Patent Literature 1, since the injection shape of the fuel from the injector is conical, a projected area of the fuel injected from the injector with respect to the vortex flow is small, and the fuel is not sufficiently dispersed in the pre-combustion chamber. Therefore, the fuel injected from the injector is not sufficiently mixed with air in the pre-combustion chamber, and the amounts of smoke and HC generated in a locally over-rich area or a low-temperature area generated after the ignition increases.

The present invention was made in view of the above facts, and its main technical problem is to provide a new and improved pre-chamber type diesel engine in which the fuel injected from the injector is favorably mixed with air in the pre-combustion chamber.

### MEANS FOR SOLVING THE PROBLEMS

As a result of diligent studies, the present inventors have found that the above-mentioned main technical problem is solved by the injector that injects fuel while dispersing the fuel in a direction orthogonal to the vortex flow of air formed in the pre-combustion chamber.

That is, according to the present invention, as a pre-chamber type diesel engine that solves the above-mentioned main technical problem, in a pre-chamber type diesel engine including a main combustion chamber and a pre-combustion chamber made to communicate by a communication hole and an injector that injects the fuel into the pre-combustion chamber,
a pre-chamber type diesel engine characterized in that the injector disperses and injects fuel in a direction orthogonal to a vortex flow formed by air flowing into the pre-combustion chamber from the main combustion chamber through the communication hole in a compression stroke of the piston is provided.

Preferably, the injection hole of the injector is constituted by a slit. The injection hole of the injector may be constituted by a plurality of small injection holes formed at intervals. An injection center axis of the fuel injected from the injector is preferably 0 to 90 degrees with respect to a tangential direction of the vortex flow. In a predetermined cross section where an inner diameter of the pre-combustion chamber is the maximum among the cross sections of the pre-combustion chamber facing the injection hole of the injector, assuming that the inner diameter of the pre-combustion chamber is D and a width of a direction orthogonal to the vortex flow of the fuel injected from the injector is d, it is preferably 0.6d ≤ D ≤ 0.8d. The injector may include a rotation preventing unit that prevents the injection hole from rotating in the tangential direction of the vortex flow. An injection pressure of the fuel from the injector is preferably 8 to 40 MPa.

### EFFECT OF THE INVENTION

In the pre-chamber type diesel engine of the present invention, the injector disperses and injects fuel in a direction orthogonal to the vortex flow of air formed in the pre-combustion chamber. Therefore, the projected area of the fuel injected from the injector with respect to the vortex flow increases, and the injected fuel is favorably mixed with air in the pre-combustion chamber. As a result, the amounts of smoke and HC contained in the combustion gas generated after ignition are reduced, and the emission is improved.

### BRIEF DESCRIPTION OF DRAWINGS

FIG. 1 is a schematic view of a preferred embodiment of a diesel engine configured in accordance with the present invention.
FIG. 2 is a diagram for explaining an air flow in the pre-combustion chamber and fuel injected from an injector in the diesel engine shown in FIG. 1.
FIG. 3 is a diagram showing injection holes of the injector included in the diesel engine shown in FIG. 1.
FIG. 4 is a diagram showing a single rotation preventing unit of the diesel engine shown in FIG. 1.
FIG. 5 is an A - A end surface view in FIG. 1.
FIG. 6 is a B - B end surface view in FIG. 1.
FIG. 7 is a diagram showing another form of a mounting structure of the injector included in the diesel engine shown in FIG. 1.

### DESCRIPTION OF EMBODIMENTS

Hereinafter, preferred embodiments of a pre-chamber type diesel engine configured in accordance with the present invention will be described in more detail with reference to the accompanying drawings.

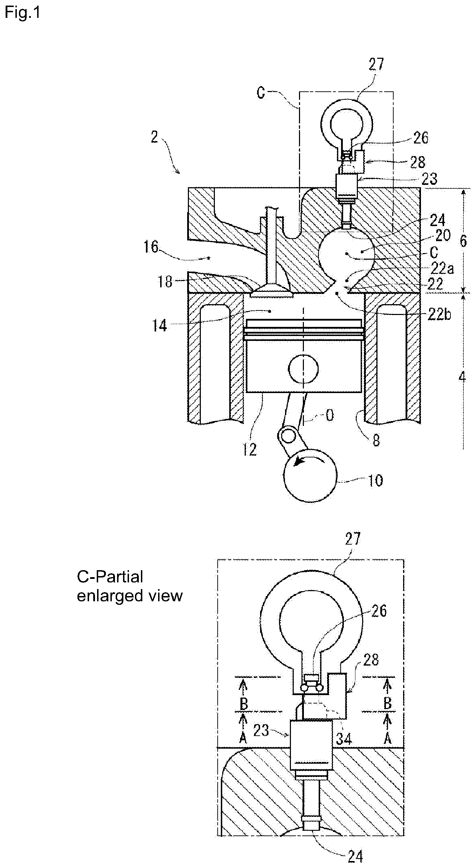

FIG. 1 shows a schematic view showing a part of configuration in a cross section of a pre-chamber type diesel engine 2 having a main combustion chamber and a pre-combustion chamber that communicate by a communication hole. The diesel engine 2 includes a cylinder block 4 and a cylinder head 6.

A cylinder 8 having a cylindrical shape with an open end face is formed inside the cylinder block 4, and a piston 12 reciprocated by a crank 10 is arranged in the cylinder 8. In the illustrated embodiment, the cylinder head 6 is placed above the cylinder block 4, and the piston 12 is reciprocated in a vertical direction. The main combustion chamber 14 is defined inside the cylinder block 4 by an inner peripheral surface of the cylinder 8, a top surface of the piston 12, and the cylinder head 6.

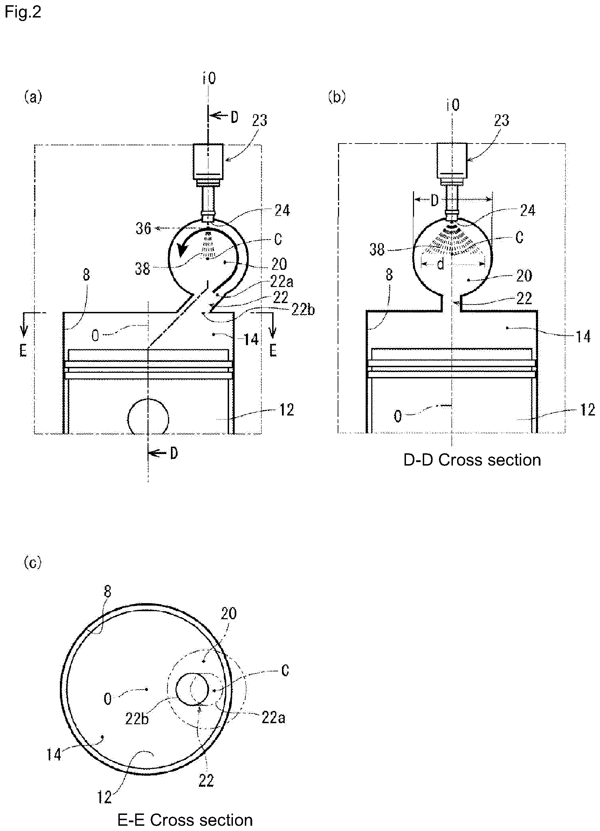

When combined with the cylinder block 4, the cylinder head 6 has an intake port 16 that sends new air to the main combustion chamber 14 and an exhaust port (not shown) that discharges the combustion gas generated in the combustion chamber formed. Valves 18 that are opened and closed at predetermined timing are provided at an outlet of the intake port 16 (that is, the inlet to the main combustion chamber 14) and an inlet of the exhaust port (that is, the outlet from the main combustion chamber 14), respectively. The cylinder head 6 further includes a pre-combustion chamber 20 and a communication hole 22 communicating with this. Explaining with reference also to FIGs. 2(a) to 2(c) together with FIG. 1, in the illustrated embodiment, the pre-combustion chamber 20 has a spherical shape as a whole, and when the cylinder head 6 is combined with the cylinder block 4, the center c of the pre-combustion chamber 20 is eccentrically arranged with respect to a center axis o of the main combustion chamber 14. The communication hole 22 extends linearly upward with inclination outward in the radial direction. An opening 22b of the communication hole 22 that is not an opening 22a formed in the pre-combustion chamber 20 is formed on an end face of the cylinder head 6, and when the cylinder head 6 is combined with the cylinder block 4, the opening 22b is faced with an intermediate portion in the radial direction on an upper surface of the main combustion chamber 14, and the pre-combustion chamber 20 and the main combustion chamber 14 communicate through the communication hole 22.

Continuing the description with reference to FIG. 1, the cylinder head 6 further includes an injector 23 that injects fuel into the pre-combustion chamber 20. The injector 23 is a so-called internally open valve type injector, which has an axial shape as a whole, and a fuel flow path (not shown) extending in the axial direction is formed therein. An injection hole 24 for injecting fuel from the fuel flow path is provided on one end surface in the axial direction (lower end surface in the illustrated embodiment) of the injector 23, and a mouth portion 26 for supplying fuel to the fuel flow path is formed on the other end portion in the axial direction (upper end portion in the illustrated embodiment). A needle valve, not shown, is built in the injector 23, and an operation of this needle valve is controlled by an electromagnetic solenoid, not shown, and the injection hole 24 is opened/closed at desired injection timing on the basis of an electric signal sent from an engine ECU, not shown. The shape of the injection hole 24 and the like will be described later. In the illustrated embodiment, an injection pressure of the fuel from the injector 23 may be a relatively low pressure of 8 to 40 MPa. Since the diesel engine according to the present invention employs the pre-chamber type, it is not necessary to inject fuel at a high pressure (for example, 200 MPa) as in a direct injection type. Therefore, it is not necessary to make the structures of the injector, a fuel pump, not shown, a fuel passage pipe which will be described later, a fuel pipe, not shown, and the like excessively robust, and a manufacturing cost of the injection device can be kept low.

The injector 23 is inserted into the cylinder head 6, the injection hole 24 is exposed in the pre-combustion chamber 20, and the other end potion in the axial direction of the injector 23 including at least the mouth portion 26 is exposed to the outside of the cylinder head 6. Then, the fuel passage pipe 27 fixed to the cylinder head 6 is connected to the mouth portion 26 by fixing means, not shown. Here, in FIG. 1 and the like, only one cylinder 8 is shown in the cylinder block 4, but in actuality, a plurality of cylinders 8 are formed in the cylinder block 4, and there are combustion chambers (the main combustion chamber 14 and the pre-combustion chamber 20) in the same number as the number of the cylinders 8. That is, the same number of injectors 23 as the number of cylinders 8 are also installed, and the fuel pressurized by the fuel pump, not shown, is distributed to the respective injectors 23 via the common fuel passage pipe 27.

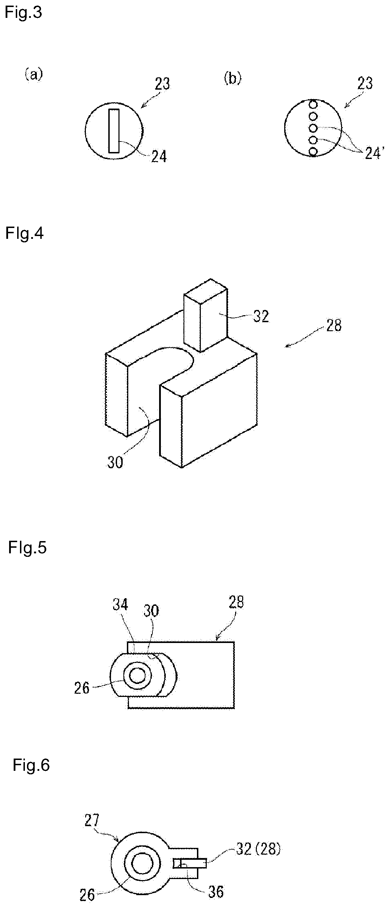

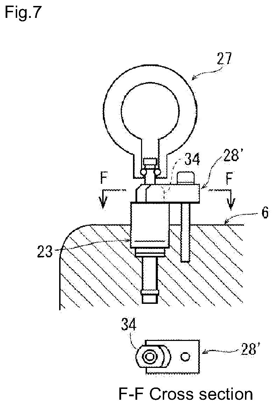

In the illustrated embodiment, the injector 23 inserted into the cylinder head 6 is fixed in the axial direction by the fuel passage pipe 27 and also in the circumferential direction by rotation preventing unit 28. As shown in FIG. 4, the rotation preventing unit 28 has a U-shape as a whole on a plan view, and an engaging groove 30 extending linearly in the vertical direction is formed. The rotation preventing unit 28 further has a cuboid-shaped engaging piece 32 projecting upward formed. On the other hand, on the other end portion of the injector 23 in the axial direction, an engaged protrusion portion 34 having a substantially rectangular cross section and fitted into the engaging groove 30 of the rotation preventing unit 28 is provided as is understood by referring to FIG. 5 together with FIG. 1. Further, as can be understood by referring to FIG. 6 together with FIG. 1, in a portion of the fuel passage pipe 27 to which the mouth portion 26 of the injector 23 is connected, an engaged notch 36 having a substantially rectangular cross section and into which the engaging piece 32 of the rotation preventing unit 28 is fitted is formed. Therefore, the engaging groove 30 of the rotation preventing unit 28 is engaged with the engaged protrusion portion 34 of the injector 23, and the engaging piece 32 of the rotation preventing unit 28 is engaged with the engaged notch 36 of the fuel passage pipe 27 fixed to the cylinder head 6, whereby the injector 23 is fixed in the circumferential direction. If desired, the injector 23 may be fixed in the circumferential direction by directly fixing rotation preventing unit 28' to the cylinder head 6 with an appropriate fastener such as a bolt, as shown in FIG. 7.

Next, the injection of fuel from the injector 23 will be described with reference to FIG. 3 together with FIG. 2. In the diesel engine of the present invention, it is important that the injector 23 disperses and injects the fuel in a direction orthogonal to a vortex flow formed by air flowing into the pre-combustion chamber 20 from the main combustion chamber 14 through the communication hole 22 in the compression stroke of the piston 12 (this is indicated in FIG. 2(a) by an arrow). In the illustrated embodiment, the injection hole 24 of the injector 23 is constituted by a slit as shown in FIG. 3(a), and the slit extends linearly in a direction perpendicular to a tangential direction of the vortex flow indicated by a reference numeral 36 in FIG. 2(a), that is, in a depth direction in FIG. 2(a) (in the left-right direction in FIG. 2(b)), and the fuel injected from the injection hole 24 in the same direction (this is indicated by reference numeral 38) is dispersed. If desired, the injection hole may be formed by a plurality of small injection holes formed at intervals, as shown by reference numeral 24' in FIG. 3 (b). Returning to FIG. 2 and continuing the description, in the illustrated embodiment, the injection center axis io of the fuel injected from the injector 23 is perpendicular to the tangential direction of the vortex flow (that is, 90 degrees), but the injection center axis io of the fuel only needs to be 0 to 90 degrees with respect to the tangential direction 36 of the vortex flow indicated by a two-dot chain line in FIG. 2(a). By setting the injection center axis io of the fuel to the above angle range with respect to the tangential direction 36 of the vortex flow, the fuel 38 injected from the injection hole 24 is favorably made to flow by the vortex flow in the pre-combustion chamber 20 and is mixed favorably with air in the pre-combustion chamber 20. Further, as shown in FIG. 2(b), in the predetermined cross section where the inner diameter of the pre-combustion chamber 20 is the maximum among the cross sections of the pre-combustion chamber 20 facing the injection hole 24, assuming that the inner diameter of the pre-combustion chamber 20 is D and a width of a direction orthogonal to the vortex flow of the fuel 38 injected from the injector 23 is d, it is preferably 0.6d ≤ D ≤ 0.8d. By setting in this way, the fuel 38 injected from the injector 23 is prevented from adhering to an inner wall surface of the pre-combustion chamber 20, and combustion of the injected fuel becomes favorable.

In the pre-chamber type diesel engine of the present invention, the injector 23 disperses and injects fuel in the direction orthogonal to the vortex flow of air formed in the pre-combustion chamber 20. Therefore, the projected area of the fuel 38 injected from the injector 8 with respect to the vortex flow increases, and the injected fuel 38 is favorably mixed with air in the pre-combustion chamber 20. As a result, the amounts of smoke and HC contained in the combustion gas generated after ignition are reduced, and the emission is improved.

Although the diesel engine of the present invention has been described in detail with reference to the accompanying drawings, the present invention is not limited to such an embodiment, and various variations or modifications can be made without departing from the scope of the present invention. For example, in the present embodiment, the cylinder head is placed on the upper surface of the cylinder block, and the piston reciprocates in the vertical direction, but instead, the cylinder head is placed on the side surface of the cylinder block, and the piston may reciprocate in the lateral (horizontal) direction.

### DESCRIPTION OF REFERENCE NUMERALS

- 2: Diesel engine
- 12: Piston
- 14: Main combustion chamber
- 20: Pre-combustion chamber
- 22: Communication hole
- 23: Injector
- 24: Injection hole
- 28: Rotation preventing unit

## Claims

1. A pre-chamber type diesel engine, comprising a main combustion chamber and a pre-combustion chamber that communicate by a communication hole and an injector that injects fuel into the pre-combustion chamber, wherein
the injector disperses and injects fuel in a direction orthogonal to a vortex flow formed by air flowing into the pre-combustion chamber from the main chamber through the communication hole in a compression stroke of a piston.

2. The pre-chamber type diesel engine according to claim 1, wherein an injection hole of the injector comprises a slit.

3. The pre-chamber type diesel engine according to claim 1, wherein the injection hole of the injector comprises a plurality of small injection holes formed at intervals.

4. The pre-chamber type diesel engine according to any one of claims 1 to 3, wherein an injection center axis of the fuel injected from the injector is 0 to 90 degrees with respect to a tangential direction of the vortex flow.

5. The pre-chamber type diesel engine according to any one of claims 1 to 4, wherein, in a predetermined cross section where an inner diameter of the pre-combustion chamber is the maximum among the cross sections of the pre-combustion chamber facing the injection hole of the injector, assuming that the inner diameter of the pre-combustion chamber is D and a width of a direction orthogonal to the vortex flow of the fuel injected from the injector is d, it is 0.6d ≤ D ≤ 0.8d.

6. The pre-chamber type diesel engine according to any one of claims 1 to 5, wherein, the injector includes a rotation preventing unit that prevents the injection hole from rotating in a tangential direction of the vortex flow.

7. The pre-chamber type diesel engine according to any one of claims 1 to 6, wherein an injection pressure of the fuel from the injector is 8 to 40 MPa.
